# EUROPEAN PATENT APPLICATION

(11) **EP 2 045 226 A2**
(43) Date of publication of application: **08.04.2009**
(21) Application number: 08017427.9
(22) Date of filing: 03.10.2008
(51) Int. Cl.: C04B 38/00, C04B 35/52, A62B 23/00, B01D 39/20

(54) **Carbon-based materials for respiratory protection**

(30) Priority: 05.10.2007 US 960601 P
(71) Applicant: HER MAJESTY THE QUEEN IN RIGHT OF CANADA AS REPRESENTED BY THE MINISTER OF NATIONAL DEFENCE OF HER MAJESTY'S CANADIAN GOV., Ottawa K1A OK2 (CA)
(72) Inventor: Cordoneanu, Adina, Klingston, Onratio K7K 6K6 (CA); Evans, Michael, Elginburg Ontario K0H 1Mo (CA)
(74) Representative: Jackson, Derek Charles

(57) **Abstract**

A monolithic, carbonaceous foam suitable for use in respiratory protection is produced by creating an emulsion of a monomer such as vinylidene chloride and/or styrene, a cross-linking agent and a surfactant, curing the emulsion to yield a polymeric foam, sulfonating the foam, and carbonizing the sulfonated foam to yield the monolithic, carbonaceous foam.

## Description

### BACKGROUND OF THE INVENTION

### FIELD OF THE INVENTION

This invention relates to a method of producing carbon-based materials for respiratory protection.

Exposure of military personnel and first responders to the release of toxic gases and vapours can be incapacitating and potentially lethal depending on the substance(s) released.

### DESCRIPTION OF RELATED ART

At present, close-fitting face masks including a canister containing adsorbent materials are used to provide protection from a variety of gases and vapours for a limited time. The adsorbents presently used primarily consist of granular active carbon characterized by a large internal surface area and small pores. Manufacture of the adsorbents involves the carbonization of an organic raw material (naturally derived from coal or cellulosic materials) followed by activation.

Alternatives to the traditional activated carbons for use in respiratory protection are always being sought. For example, inorganic materials may be used. There is presently considerable interest in the use of synthetic materials to prepare carbons in monolithic forms with tailored pore structures which hopefully exhibit more efficient adsorption properties. There is also considerable interest in the use of polymers having controlled porosity as adsorbents, but carbon derived from such synthetic materials have not become widely used commercially because of their high price compared to other traditional adsorbents.

Traditionally, gas mask canisters are filled with a carbonaceous granular material onto which inorganic and organic materials have been deposited to augment the adsorptive capacity of the carbon by initiating the chemical decomposition of some highly toxic gases to less toxic products. Physical adsorption of these products and other harmful gases is accomplished by the adsorbent material. The granular nature of the adsorbent can lead to channeling (allowing some gases to quickly penetrate the adsorbent bed) and to attrition due to mechanical vibration (the carbon breaks into smaller particles which can clog the filter, making it more difficult to breathe through).

Current activated carbons used in respiratory protection are produced by carbonization of raw materials such as wood, coal and coconut shells at temperatures below 800°C in the absence of oxygen, followed by chemical or physical activation of the carbonized product. These materials show excellent adsorbent properties attributed mostly to their high surface area of 800-1500 m²/g which is contained predominantly within micropores. However, they are characterized by two major disadvantages, namely the poorly controlled distribution of pore sizes and the presence of a variety of impurities (sulphur, metals, etc.) characteristic of the naturally derived precursors which may have a deleterious effect on the carbon's performance.

In addition, carbonization results in elimination of noncarbon elements such as oxygen and hydrogen followed by grouping of the residual carbon atoms into condensed aromatic rings, which arrange themselves irregularly, leaving free small gaps between them that could be blocked by impurities thereby reducing adsorbing capacity. Moreover, simple carbonization results in products with both low surface area and low developed pore structure which leads to low adsorption capacity. Chemical or physical activation is then needed in order to enhance pore structure by transforming the carbonized material into a form that contains pores of various shapes and sizes which increase their surface area. The loosely packed adsorbent must be held within a housing and traditional filling processes limit the shape of the housing.

### BRIEF SUMMARY OF THE INVENTION

In accordance with the present invention, a carbonaceous, monolithic foam is produced for replacing the granular adsorbent.

The foam is produced by creating an emulsion of a monomer, a cross-linking agent and a surfactant in water; curing the emulsion by heating to yield a polymeric foam; sulfonating the foam; and carbonizing the sulfonated foam by heating to yield the monolithic, carbonaceous foam. The foam can be shaped according to requirements, permitting easier design of shaped filter units. This can assist in reducing the burden resulting from wearing ergonomically poor shapes/designs. An open-celled structure will allow breathing air to be drawn through the material.

In greater detail, the open-celled foam structure is produced by the creation of a high internal phase emulsion (HIPE) of a monomer, which is in fact a water-in-oil emulsion acting as a template for the production of highly porous polyHIPE materials. The materials are obtained by polymerization of the monomer continuous phase yielding an interconnected foam. Subsequent pyrolysis of the foam yields a highly porous carbon having aqueous material the same morphology as the polymer. Inorganic and organic impregnants currently in use for granular carbons for respiratory protection can then be applied.

Carbon foams obtained by carbonization of suitable polymers derived from HIPEs offer a better control over the pore size distribution which would result in excellent adsorptive properties and potentially low breathing resistance due to the optimization of the required structure, resulting in reduction of the required filtration bed. These materials are characterized by a low bulk density, typically less than 0.15 g/cm³, and cell sizes in the range of 5-100 µm depending on the preparation conditions.

In order to obtain technologically useful materials the porous structure of the monoliths must have a meso/macroporous network. The presence of large macropores (greater than 50 nm) would ensure the rapid transport of species and a low pressure drop, whereas mesopores (2-50 nm) would guarantee a large and accessible surface area for adsorption. The walls of these interconnected cells would be microporous (<2 nm) providing adsorption sites for toxic gases and vapors.

Despite their low density, polyHIPEs as novel precursors are used for the production of porous carbons having a blend of pore sizes which would result in excellent adsorptive properties and low breathing resistance.

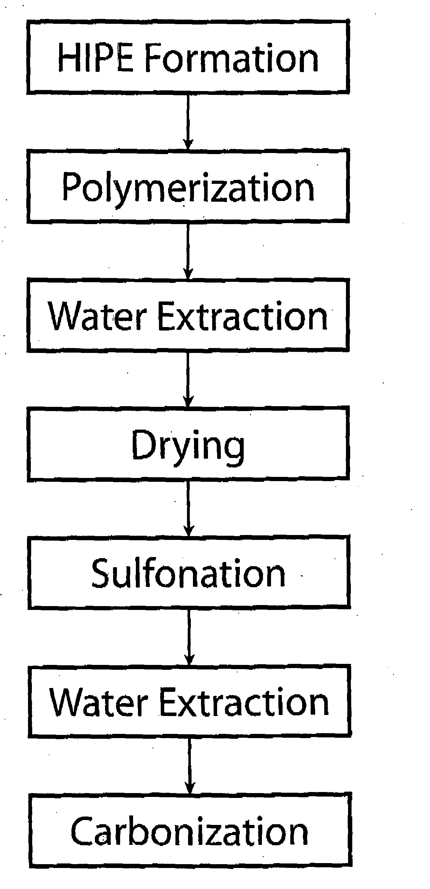

### BRIEF DESCRIPTION OF THE DRAWING

The process for preparing carbon monoliths is described in greater detail with reference to the accompanying drawing, the single figure of which is a flow diagram of the process.

### DETAILED DESCRIPTION OF THE INVENTION

As illustrated schematically in the drawing, an aqueous phase consisting of water and an initiator are added slowly to a mixture of the monomer, a cross-linking agent and a suitable surfactant. Mixing is continued for approximately 1 hour and once all the internal aqueous phase has been added the emulsion is cured at 60°C for a time sufficient to effect polymerization. The resulting porous material is washed and then dried. Samples are then sulfonated, washed with water and carbonized in order to obtain the monolithic carbonaceous materials.

The novelty to this fairly common synthesis method is the use of, amongst other monomers, vinylidene chloride alone or with styrene in combination with divinylbenzene cross-linker. It is important to avoid sample cracking upon sulfonation and carbonization. This is accomplished by passing the sulfonated samples (cooled down to ambient temperature after sulfonation at 95°C) through a series of sulfuric acid aqueous solutions (90%, 80%, 60%, 40%, 20% and 10%) for 1 hour each time and then washing them with water in a Soxhlet extractor overnight.

Carbonization is carried out at up to 540°C in order to avoid cracking of the sulfonated samples. The typical temperature program is: 20°C to 200°C (1°C min⁻¹), dwell 2 h, increase to 540 at a rate of 1°C min⁻¹, dwell 2 h and then cool to ambient temperature at a rate of 1°C min⁻¹.

The following examples provide a better understanding of the process of the present invention.

### Example 1

An organic solution made up of vinylidene chloride (VDC), styrene (ST) and divinylbenzene (DVB) and Span 80® (sorbitan monooleate) (3 mL) was placed in a 300 mL wide-necked polyethylene bottle. The mixture was stirred with a PTFE stirrer fitted with a 3.5 cm paddle connected to an overhead stirrer motor at approximately 300 rpm. The neck of the bottle was covered with plastic film to reduce evaporative losses. The aqueous solution prepared separately by dissolving potassium persulfate (0.3g) and anhydrous calcium chloride (1.0 g) in distilled water was then added dropwise with constant mechanical stirring of the organic solution through an aperature in the film over a period of approximately 60 min. Throughout this time the stirrer paddle was gradually moved upward as the volume of the bottle content gradually increased, so that no water pockets formed. A creamy white, HIPE formed slowly. Once all the aqueous solution had been added, stirring was continued for a further 5 min to produce an emulsion as uniform as possible. The stirrer was removed and the content of the bottle was transferred to glass vials, which were then capped and placed in an oven at 60°C for 24 h in order to polymerize the HIPE. After polymerization, the resulting polymer monolith was removed from the vials by cracking the glass vials and extracted in a Soxhlet apparatus with distilled water for 24 h to remove any inorganic impurities. The samples were obtained as rigid white solids. The porous material was dried in a vacuum oven at 50°C for several hours.

Sulfonation of the polyHIPE samples was carried out with concentrated sulfuric acid. The sample monolith was kept in the acid under vacuum for 90 min and then heated at 95°C for 24 h in air. In order to avoid sample cracking, the sulfonated samples (cooled down to room temperature) were passed through a series of sulfuric acid aqueous solutions (90%, 80%, 60%, 40%, 20% and 10%) for 1 hour each time and then washed with water in a Soxhlet extractor overnight.

The sulfonated samples were then heated under N₂ in a tube furnace from ambient temperature to 200°C (0.5°C min⁻¹), dwell 2 h, then the temperature was increased to 540°C at a rate of 1°C min⁻¹, dwell 2 h, and finally the samples were cooled to room temperature (to prevent oxidation by air) at a rate of 1°C min⁻¹.

### Example 2

A porous polymer was prepared using 11.25 mL styrene (ST) and 1.25 mL divinylbenzene (DVB) containing 80% ethyl vinyl benzene to a 90% void volume using 0.637g anhydrous calcium chloride, 0.256 g potassium persulphate as initiator and 2.5 g of Span 80 as surfactant. The aqueous phase (113 mL of distilled water containing the initiator and calcium chloride) was dispersed dropwise in the organic mixture of monomers and surfactant with constant mechanical stirring (300 rpm) over a period of ∼60 min. Throughout this time the stirrer paddle was gradually moved upward as the volume of the bottle content gradually increased, so that no water pockets formed. A creamy white, HIPE formed slowly. Once all the aqueous solution has been added, stirring was continued for further 5 min, to produce an emulsion as uniform as possible. The stirrer was removed and the content of the bottle transferred in glass vials, which were then capped and placed in an oven at 60° C for 24 h in order to polymerize the HIPE. After polymerization the resulting polymer monolith was removed from the vials by cracking the glass vials and extracted in a Soxhlet apparatus with distilled water for 24 h to remove any inorganic impurities. The samples were obtained as rigid white solids. The porous material was drived in a vacuum over at 50° C for several hours.

Sulfonation of PolyHIPE samples was carried out with concentrated sulfuric acid. The sample monolith was kept into acid under vacuum for 90 min. then heated at 95° C for 24 h in air. In order to avoid sample cracking the sulfonated samples (cooled down to room temperature) were passed through a series of sulfuric acid aqueous colutions (90%, 80%, 60%, 40%, 20% and 10%) for 1 hour each time and then washed with water in a Soxhlet overnight.

The sulfonated samples were then heated under N₂ in a tube furnace from ambient temperature to 200° C (0.5 °C min⁻¹), dwell 2h, then increased to 540° C at a rate of 1 °C min⁻¹, dwell 2h and cooled to room temperature (to prevent oxidation by air) at a rate of 1° C min⁻¹.

### Example 3

3 g of Span 80 were dissolved in a mixture of 16 mL of vinylidene chloride (VDC) and 4 mL of DVB. 100 mL of an aqueous phase containing 0.3 g of potassium persulphate and 1.0 g of anhydrous calcium chloride were dispersed in the monomer mixture as stated in Example 1. The sample was then polymerized, extracted, dried, sulphonated and carbonized as set out in Example 1.

Details of materials prepared with varying contents of vinylidene chloride, styrene and divinylbenzene are listed in Table 1.

**TABLE 1**

| Sample | VDC (vol%) | ST (vol%) | DVB (vol%) | Distilled Water (vol%) |
|---|---|---|---|---|
| 1 | 16 | 0 | 4 | 80 |
| 2 | 15 | 0 | 5 | 80 |
| 3 | 14 | 0 | 6 | 80 |
| 4 | 13 | 0 | 7 | 80 |
| 5 | 10 | 5 | 5 | 80 |
| 6 | 0 | 9 | 1 | 90 |

The characteristics of the polyHIPE foams are listed in Table 2 below.

**Table 2**

| Sample | Bulk density (g.cm³) | Surface area (m²/g) | Porosity (%) |
|---|---|---|---|
| 1 | 0.147 | 423 ± 8 | 96 |
| 2 | 0.131 | 369 ±7 | 98 |
| 3 | 0.133 | 322 ± 6 | 93 |
| 4 | 0.154 | 402 ± 9 | 91 |
| 5 | 0.163 | 105 ± 8 | 92 |
| 6a | 0.085 | 455 ± 3 | 94 |
| 6b | 0.080 | 414 ± 8 | 90 |

| | | | |
|---|---|---|---|
| 6a - Sample 6 carbonized at 700° C 6b - Sample 6 extracted with water and isopropanol carbonized at 540° C | | | |

All samples show porosities greater than 90% regardless of their composition and most of them have surface areas higher than 400 m²/g. Pressure drop measurements at an equivalent flow rate in the range of 0.432 to 1.323 LPM, depending on the samples' diameter and length, to that of a regular canister showed values of 54.82 ± 2.41 cmH₂O/cm²/cm for Samples 6a and 6b composed of only ST and DVB compared to around 4.5 cmH₂O/cm²/cm for the ones composed of BDC and DVB. The airflow resistance of an assembled typical C7A canister containing charcoal beads is around 10 mm of water at an airflow rate of 32 LPM which corresponds to a pressure drop value of 36.22 cmH₂O/cm²/cm which is slightly lower than the pressure drop values obtained for ST-DBV samples.

Two of the most important characteristics of an adsorbent for respiratory protection are adsorptive capacity for a wide range of gases and vapours, and breathability (low pressure drop). Regardless of the method used to produce the porous carbon, to optimize these two characteristics presents a challenge, as an increase in one usually leads to a decrease in the other.

Monolithic carbons of polymeric origin have never been used commercially as adsorbents in respiratory protection. Carbon monoliths prepared using the carbonized polymers described above will show a well developed pore structure and as a result no further increase in the number of randomly distributed pores of various shapes and sizes will be necessary using an activation process.

Another advantage of this invention is the complete control this method offers over the pore size distribution of the final product in comparison to existing processes which result in products consisting mostly of micropores.

The purity of the carbon monoliths is better controlled by this method since pure starting materials are used.

In addition, a monolith has several advantages over a particulate adsorbent bed such as the following:
- channeling does not occur,
- mechanical vibration does not produce attrition and the subsequent reduction in flow properties and
- impregnation can be done in a more controlled manner. For example, one or more impregnants can be introduced on one side of the monolith and others on the other side creating a dual-bed situation which is not destroyed by mechanical agitation. Dual-bed canisters have been shown to be more effective than mixed-bed canisters.

## Claims

1. A process for producing a monolithic, carbonaceous foam comprising the steps of:
creating an emulsion of a monomer, a cross-linking agent and a surfactant in water;
curing the emulsion by heating to yield a polymeric foam;
sulfonating the foam; and
carbonizing the sulfonated foam by heating to yield the monolithic, carbonacous foam.

2. The process of claim 1, wherein the monomer is at least one of vinylidene chloride and styrene.

3. The process of claim 1 or 2, wherein the cross-linking agent is divinylbenzene.

4. The process of any of the preceding claims, wherein the surfactant is sorbitan monooleate.

5. The process of any of the preceding claims, wherein sulfonation of the polymeric foam is effected using sulfuric acid.

6. A process for producing a monolithic, carbonaceous foam comprising the steps of:
creating an aqueous emulsion of vinylidene chloride, styrene, divinylbenzene and a surfactant;
heating the emulsion to yield a polymeric foam;
sulfonating the polymeric foam; and
carbonizing the sulfonated foam to yield the monolithic, carbonaceous foam.

7. The process of claim 6, wherein the emulsion is created by preparing an organic solution of vinylidene chloride, styrene, divinylbenzene and sorbitan monooleate; and mixing an aqueous solution of potassium persulfate and anhydrous calcium chloride with the organic solution.

8. A process for producing a monolithic carbonaceous foam comprising the steps of:
creating an aqueous emulsion of styrene, divinylbenzene and a surfactant heating the emulsion to yield a polymeric foam;
sulfonating the polymeric foam; and
carbonizing the sulfonated foam to yield the monolithic, carbonaceous foam.

9. The process of claim 8, wherein the emulsion is created by preparing an organic solution of styrene, divinylbenzene and sorbitan monooleate; and mixing an aqueous solution of anhydrous calcium chloride and potassium persulfate with the organic solution.

10. A process for producing a monolithic, carbonaceous foam comprising the steps of:
creating an aqueous emulsion of vinylidene chloride, divinylbenzene and a surfactant;
heating the emulsion to yield a polymeric foam;
sulfonating the polymeric foam; and
carbonizing the sulfonated foam to yield the monolithic, carbonaceous foam.

11. The process of claim 10, wherein the aqueous emulsion is created by preparing an organic solution of vinylidene chloride, divinylbenzene and sorbitan monooleate; and mixing an aqueous solution of potassium persulfate and anydrous calcium chloride with the organic solution.
